# EUROPEAN PATENT APPLICATION

(11) **EP 1 901 575 A2**
(43) Date of publication of application: **19.03.2008**
(21) Application number: 07018140.9
(22) Date of filing: 14.09.2007
(51) Int. Cl.: H04Q 7/38

(54) **Method and apparatus for setting serving grant in a wireless communications system**

(30) Priority: 15.09.2006 US 844681 P; 02.11.2006 US 864157 P
(71) Applicant: Innovative Sonic Limited, Tortola (VG)
(72) Inventor: Tseng, Li-Chih, Peitou Taipei City (TW); Jiang, Sam Shiaw-Shiang, Peitou Taipei City (TW)
(74) Representative: Schaeberle, Steffen

(57) **Abstract**

A method for setting a serving grant value in a user end of a wireless communications system includes steps of determining a maximum serving grant value when a non-serving relative grant message is received (502), and updating the serving grant value according to the maximum serving grant value (504).

## Description

This application claims the benefit of U.S. Provisional Application No. 60/844,681, filed on Sep 15, 2006 and entitled "Method and Apparatus for handling transmission grant in a high speed communications system", the contents of which are incorporated herein by reference.

The present invention relates to a method and apparatus for setting serving grant in a wireless communications system according to the pre-characterizing clauses of claims 1 and 10.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting third generation mobile telecommunication technology, the prior art provides High Speed Downlink Package Access (HSDPA) and High Speed Uplink Package Access (HSUPA), which are used to increase bandwidth utility rate and package data processing efficiency to improve uplink/downlink transmission rate.

HSUPA increases upstream network performance, reduces transmission delay by rapid retransmission of erroneous data transmissions, and can adjust transmission rate based on channel quality. To realize this type of "power control," HSUPA adopts technologies such as NodeB Scheduling, Hybrid Automatic Repeat Request (HARQ), Soft Handover, and Short Frame Transmission. Correspondingly, the 3rd Generation Partnership Project (3GPP) defines an Enhanced Dedicated Transport Channel (E-DCH) for controlling operations of HSUPA. E-DCH introduces new physical layer channels, such as E-HICH, E-RGCH, E-AGCH, E-DPCCH, and E-DPDCH, which are used for transmitting HARQ ACK/NACK, Uplink Scheduling Information, Control Plane information, and User Plane information. Detailed definitions of the above can be found in the Medium Access Control (MAC) protocol specification, "3GPP TS 25.321 V7.1.0," and are not given here.

Through Node B Scheduling technology, a base station (Node B) is allowed to adjust transmission power of mobiles or user equipments (UEs), named Serving Grant (SG), within its transmission range (cell), so as to control uplink transmission rate of the UEs. Referring to sections 9.2.5.2.1 and 9.2.5.2.2 of the aforementioned MAC protocol specification, the network can provide Relative Grant (RG) messages and Absolute Grant (AG) messages to a UE through an E-DCH Relative Grant Channel (E-RGCH) and an E-DCH Absolute Grant Channel (E-AGCH) respectively, so as to adjust the transmission grant of the UE.

The RG messages adjust the SG of the UE according to a state variable reference_ETPR (which is the previous SG value). Detail description of the reference_ETPR can be found in the section 3.1.2 of the aforementioned MAC protocol specification, and are not given here. The RG messages can be divided into Serving Relative Grant (SRG) messages and Non-serving Serving Relative Grant (NSRG) messages. An SRG message is transmitted from a serving cell of a serving Radio Link Set (RLS), and allows a Node B scheduler to incrementally adjust the SG of a UE under its control through commands of "UP", "DOWN" or "HOLD." In addition, there can only be one SRG command received at any one time.

An NSRG message is transmitted from a non-serving Radio Link (RL), and allows neighboring Node B's to adjust the transmition transmission rate of UEs that are not under their control in order to avoid overload situations. By definition, there could be multiple non-serving relative grant commands received by MAC at any time, and NSRG commands include "DOWN" and "HOLD."

In comparison, the AG messages are used to directly adjust the transmission grant of the UE, and can be classified into two types, Primary and Secondary. A Primary AG message provides an uplink resource grant for a specified UE served by a cell. A Secondary AG message provides an uplink resource grant for a group of UEs served by the cell, so as to reduce signaling overhead. On the other hand, the AG message includes an AG value field and an AG scope field. The AG value field indicates the transmission resource the UE is allowed to use in the next transmission. The AG scope field indicates whether HARQ activation/de-activation will affect one or all HARQ processes.

According to the aforementioned MAC protocol specification, if an NSRG message indicates "DOWN" for a Transmission Time Interval (TTI), and the SG value of the UE is not equal to "Zero_Grant", the UE shall set the SG value (A) to be the minimum of the current SG value (B) and an SG value (D) determined by adjusting the previous SG value (C) in accordance with the NSRG message. That is, A is the minimum of B and D, and D is determined by adjusting C according to the NSRG message. Then, the UE shall set the Maximum Serving Grant (MSG) value to be the result, A. In the end, if an NSRG Timer is not active, it shall be started., otherwise Otherwise, it shall be restarted. Oppositely, if no NSRG messages indicate "DOWN" for a TTI, and the NSRG Timer has not expired, then the UE shall set the SG value to be the minimum of the MSG and the current SG value.

This in mind, the present invention aims at providing a method and apparatus for setting serving grant in a wireless communications system, so as to avoid radio resource waste and system overload.

This is achieved by a method and apparatus for setting serving grant in a wireless communications system according to the pre-characterizing clauses of claims 1 and 10. The dependent claims pertain to corresponding further developments and improvements.

As will be seen more clearly from the detailed description following below, the claimed method for setting a serving grant value in a user end of a wireless communications system according to the Medium Access Control protocol specification of the 3rd Generation Partnership Project, comprises steps of determining a maximum serving grant value when a non-serving relative grant message is received, and updating the serving grant value according to the maximum serving grant value.

In the following, the invention is further illustrated by way of example, taking reference to the accompanying drawings. Thereof
Fig. 1 illustrates a schematic diagram of radio resource waste in the prior art SG update procedure.
Fig. 2 illustrates a schematic diagram of system overload in the prior art SG update procedure.
Fig. 3 is a function block diagram of a wireless communications device.
Fig. 4 is a diagram of program code of Fig. 23.
Fig. 5 is a flowchart of a process according to the embodiment of the present invention.
Fig. 6, 7, and 8 illustrate schematic diagrams of the SG update procedure according to the embodiment of the present invention.

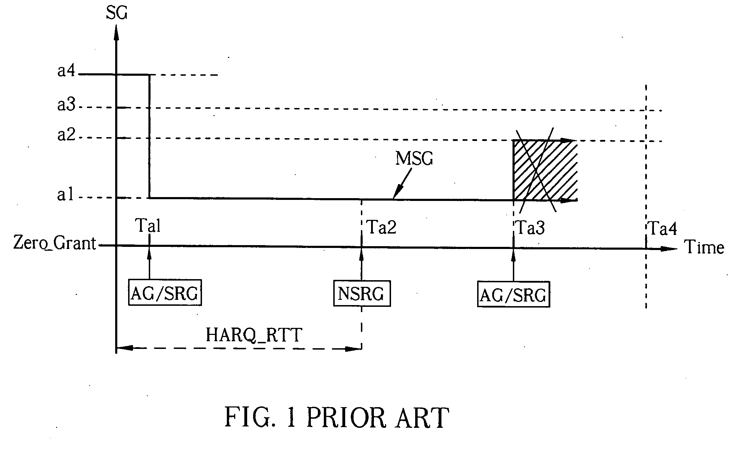

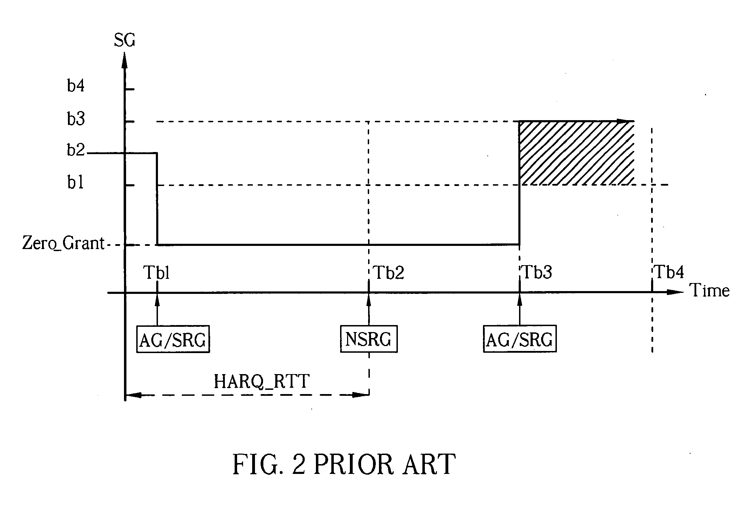

In some situations, the prior art may cause radio resource waste and system overload. Please refer to Fig. 1 and Fig. 2, which illustrate schematic diagrams of problems in the prior art SG update procedure. For clarity, the notations and their meanings are as follows. SG: Serving Grant value, AG: Absolute Grant message, SRG: Serving Relative Grant message, NSRG: Non-Serving Relative Grant message, MSG: Maximum Serving Grant, Zero_Grant: zero grant, and HARQ_RTT: Round Trip Time (or TTI) of an HARQ process.

In Fig. 1, the initial SG is a4. At a time instant Ta1, an AG or SRG for adjusting SG from a4 to al (al>Zero_Grant) is received. Then, the UE immediately changes SG from a4 to al. At a time instant Ta2, an NSRG indicating "DOWN" is received. Since SG is not equal to Zero_Grant, SG will be updated first by choosing the minimum value of the current SG (a1) and the grant smaller than the previous one by one grade (a3). Obviously, al is smaller than a3, so that the UE will set SG to be al at the time instant Ta2, and then assigned the updated SG (al) to the MSG In the meantime, an NSRG timer (set to HARQ_RTT) is started. The duration of the NSRG timer is HARQ_RTT and the NSRG timer will expire at the time instant Ta4.

Then, at a time instant Ta3 of the next TTI (between Ta2 and Ta4), an AG or SRG for adjusting SG from al to a2 is received. According to the prior art, since no NSRG messages indicate "DOWN" for this TTI, and the NSRG Timer has not expired, the UE will set SG to be the minimum of MSG (al) and the current SG (a2). Obviously, al is smaller than a2, so that SG is kept at al. In other words, after the AG/SRG is received at the time instant Ta3, the UE will set SG to a2 at the first, and then set SG back to MSG (al) due to a2 > MSG in the end. In short, using the prior art SG update procedure, if no NSRG messages indicate "DOWN" for a TTI, and the NSRG Timer has not expired, then the serving cell cannot increase the transmission grant of the UE through AG or SRG. As a result, even after the expiration of the NSRG timer, SG is kept unchangeable until receiving other AG/SRG/NSRG UE will still transmit packets in a rate lower than what the serving cell allows before another AG/SRG/NSRG is received. The granted transmission resource is wasted.

In Fig. 2, the initial SG is b2. At a time instant Tb1, an AG or SRG for adjusting SG from b2 to Zero_Grant is received. The UE immediately changes SG from b2 to Zero_Grant accordingly. Then, at a time instant Tb2, an NSRG indicating "DOWN" is received to adjust SG from b2 to a grant smaller than b2 by one grade, b1, to avoid overload. At this time instant, since SG equals Zero_Grant, the UE will ignore the NSRG by the prior art so that MSG will not be updated, and the NSRG timer will not be started or restarted. In such a situation, MSG could be any value depending on previous scenarios, e.g. MSG = b4. In other words, when SG = Zero_Grant, NSRG is ineffective.

Then, at a time instant Tb3, an AG/SRG for upgrading SG to b3 (b3 > b1) is received. Since MSG is kept unchangeable (b4), SG will be updated to b3, resulting in an overload (b1 to b3) to the non-serving cell which sent the NSRG before.

Therefore, the prior art SG update procedure may cause radio resource waste and system overload.

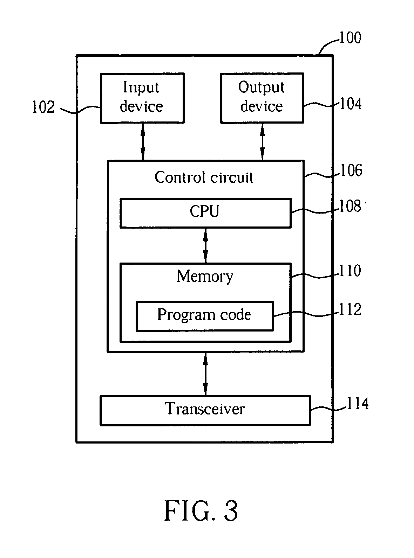

Please refer to Fig. 3, which is a functional block diagram of a communications device 100. For the sake of brevity, Fig. 3 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

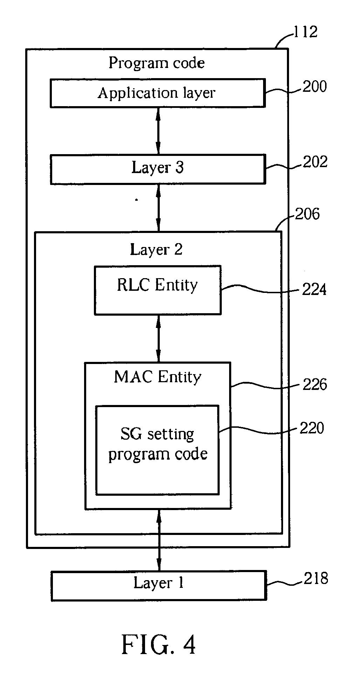

Please continue to refer to Fig. 4. Fig. 4 is a diagram of the program code 112 shown in Fig. 3. The program code 112 includes an application layer 200, a Layer 3 202, and a Layer 2 206, and is coupled to a Layer 1 218. The Layer 2 206 comprises two sub-layers: a radio link control (RLC) entity 224 and a media access control (MAC) entity 226. A primary function of the RLC entity 224 is providing different transmission quality processing, performing segmentation, reassembly, concatenation, padding, retransmission, sequence check, and duplication detection on transmitted data or control instructions based on different transmission quality requirements.
The MAC entity 226 can match packets received from different logic channels of the RLC entity 224 to common, shared, or dedicated transport channels according to radio resource allocation commands of the Layer 3 (RRC layer) 202, for performing channel mapping, multiplexing, transport format selection, or random access control.

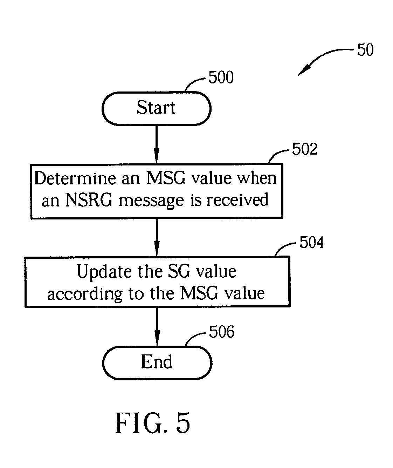

In some applications, such as when realizing high-speed uplink packet access (HSUPA) functions, the MAC entity 226 can adjust the transmission grant (Serving Grant, SG) of the communications device 100 according to a NSRG (Non-serving Serving Relative Grant) message sent from the network, in order to avoid system overload. In this situation, the embodiment of the present invention provides an SG setting program code 220 utilized for setting SG value, in order to avoid radio resource waste and system overload. Please refer to Fig. 5, which illustrates a flowchart diagram of a process 50 according to the embodiment of the present invention. The process 50 is utilized in a user end of a wireless communications system for setting an SG value, and can be compiled into the SG setting program code 220. The process 50 comprises the following steps:
Step 500: Start.
Step 502: Determine an MSG (Maximum Serving Grant) value when an NSRG message is received.
Step 504: Update the SG value according to the MSG value.
Step 506: End.

According to the process 50, the embodiment of the present invention determines the MSG value first, and then updates the SG value, so as to avoid radio resource waste and system overload. In other words, regardless of whether the SG value equals 0 (Zero_Grant), as long as an NSRG message is received, the embodiment of the present invention determines the MSG value first, and then updates the SG value accordingly.

In step 502, preferably, the embodiment of the present invention determines the MSG value according to the NSRG message and a reference value, which is the state variable reference_ETPR. Preferably, the embodiment of the present invention first determines an SG adjustment result according to the NSRG message and the reference value, and then determines the MSG value according to the SG adjustment result. That is, when an NSRG message is received, the embodiment of the present invention determines the SG adjustment result according to the NSRG message and the reference value reference_ETPR, and then updates the MSG value as the SG adjustment result.

In addition, in step 502, preferably, the embodiment of the present invention determines the MSG value according to a current MSG value, the NSRG message and a reference value during the duration of the NSRG timer. Preferably, the embodiment of the present invention first determines an SG adjustment result according the NSRG message and the reference value, then compares the SG adjustment result and the current MSG value, and finally updates the MSG value as the minimum of the SG adjustment result and the current MSG value. In other words, when an NSRG message is received during the duration of the NSRG timer, the embodiment of the present invention determines the SG adjustment result according to the NSRG message and the reference value reference_ETPR, and then updates the MSG value as the minimum of the SG adjustment result and the current MSG value.

Moreover, in step 504, preferably, the embodiment of the present invention updates the SG value as the minimum of the MSG value and a current SG value.

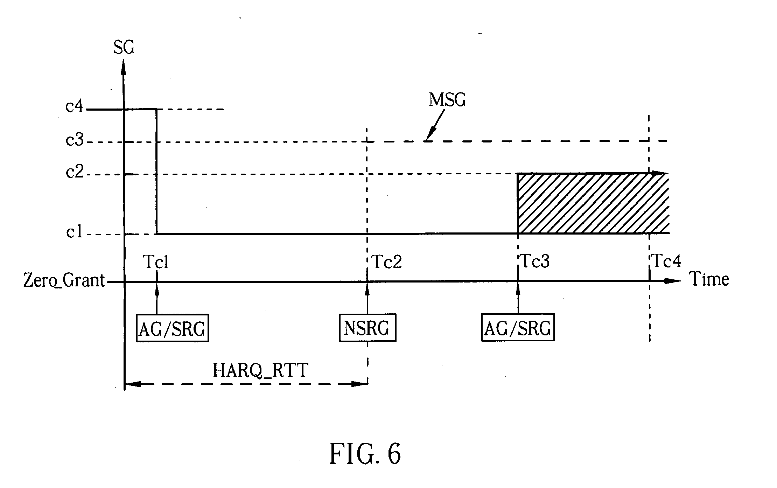

Therefore, through the process 50, the embodiment of the present invention can avoid radio resource waste or system overload. For example, please refer to Fig. 6 to Fig. 8, which illustrate schematic diagrams of the SG update procedure according to the embodiment of the present invention. For brevity, the notations and their meanings in Fig. 6 to Fig. 8 are the same as those in Fig. 1 and Fig. 2.

In Fig. 6, the initial SG is c4. At a time instant Tc1, an AG or SRG for adjusting SG from c4 to c1 is received. Then, the UE immediately changes SG from c4 to c1. At a time instant Tc2, an NSRG indicating "DOWN" is received. According to the process 50, regardless of whether c1 equals Zero_Grant, the embodiment of the present invention will first update MSG as c3 according to the SG adjustment result c3 (which is the grant smaller than the previous one (c4) by a preset value), and updates SG as the minimum of MSG (c3) and the current SG (cl), which is c1. Meanwhile, the NSRG timer (which is set to HARQ_RTT, and expires at a time instant Tc4) is started.

Then, at a time instant Tc3 of the next TTI (between Tc2 and Tc4), an AG or SRG for adjusting SG from c1 to c2 is received. Since no NSRG messages indicate "DOWN" for this TTI, and the NSRG Timer has not expired, the UE will set SG to be the minimum of MSG (c3) and the current SG (c2). In other words, because MSG equal to c3 is greater than c2, the serving cell can successfully upgrade SG from c1 to c2.

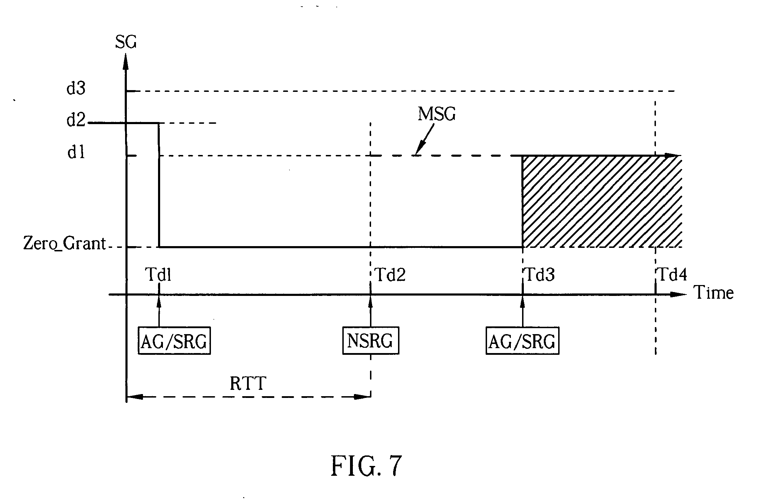

In Fig. 7, the initial SG is d2. At a time instant Td1, an AG or SRG for adjusting SG from d2 to Zero_Grant is received. The UE immediately changes SG from d2 to Zero_Grant accordingly. Then, at a time instant Td2, an NSRG indicating "DOWN" is received to adjust SG from d2 to a grant smaller than d2 by a preset value, d1, to avoid overload. At this time instant, although the current SG equals Zero_Grant, yet the embodiment of the present invention updates MSG as d1. Then, at a time instant Td3, an AG/SRG for upgrading SG to d3 (d3 > d1) is received. Since MSG has be updated to d1, the UE can only upgrade SG to d1, which avoids system overload.

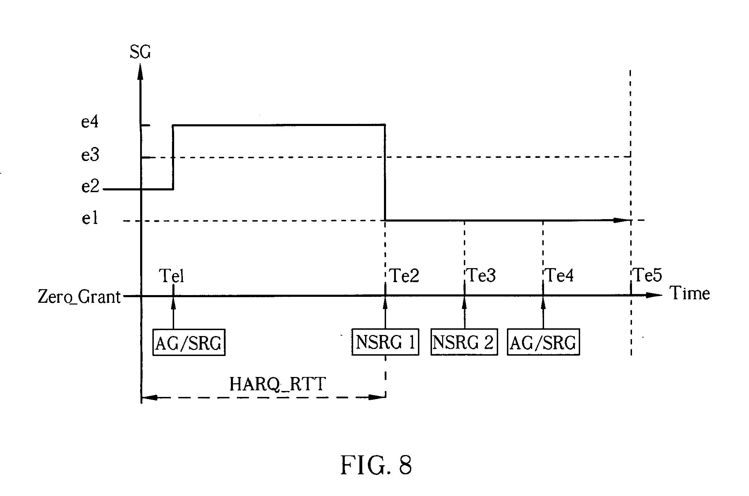

In Fig. 8, the initial SG is e2. At a time instant Te1, an AG or SRG for adjusting SG from e2 to e4 is received. Then, the UE immediately changes SG from e2 to e4. At a time instant Te2, an NSRG1 indicating "DOWN" is received. According to the process 50, a preferred embodiment of the present invention first sets MSG to e1 according to the SG adjustment result e1 (which is the grant smaller than the previous one (e2) by a preset value), and updates SG as the minimum of MSG (el) and the current SG (el), which is e1. Meanwhile, the NSRG timer (which is set to HARQ_RTT, and expires at a time instant Te5) is started.

Then, at a time instant Te3 of the next TTI (between Te2 and Te5), another NSRG2 indicating "DOWN" is received. Since the NSRG timer is still running, according to the process 50, the preferred embodiment of the present invention will first set MSG to e1 according the current MSG (el) and the SG adjustment result e3 (which is the grant smaller than the previous one (e4) by a preset value), and then updates SG as the minimum of MSG (el) and the current SG (el), which is e1. In such situation, at a time instant Te4, an AG or SRG for adjusting SG from e1 to e3 (e3>el) is received. Since MSG equals el, SG will keep at el, in order to avoid system overload.

In summary, the embodiment of the present invention determines MSG at the first, and then updates SG, so as to avoid radio resource waste and system overload.

## Claims

1. A method for setting a serving grant value in a user end of a wireless communications system according to the Medium Access Control protocol specification of the 3rd Generation Partnership Project, the method comprising steps of:
receiving a non-serving relative grant message
**characterized by** determining a maximum serving grant value when the non-serving relative grant message is received (302); and
updating the serving grant value according to the maximum serving grant value (304).

2. The method of claim 1, **characterized in that** the step of updating the serving grant according to the maximum serving grant value comprises:
updating the serving grant value as a minimum value of the maximum serving grant value and a current serving grant value.

3. The method of claim 1, **characterized in that** the step of determining the maximum serving grant value when the non-serving relative grant message is received comprises:
determining the maximum serving grant value according to the non-serving relative grant message and a reference value.

4. The method of claim 3, **characterized in that** the reference value is corresponding to a serving grant value of a previous transmission time interval.

5. The method of claim 3, **characterized in that** determining the maximum serving grant value according to the non-serving relative grant message and the reference value comprises:
determining an adjustment result of the serving grant value according to the non-serving relative grant message and the reference value; and
determining the maximum serving grant value according to the adjustment result of the serving grant value.

6. The method of claim 5, **characterized in that** determining the adjustment result of the serving grant value according to the non-serving relative grant message and the reference value is setting the adjustment result of the serving grant value as a value gained by subtracting a preset value from the reference value when the non-serving relative grant message indicates to reduce the serving grant value of the user end.

7. The method of claim 1, **characterized in that** the step of determining the maximum serving grant value when the non-serving relative grant message is received comprises::
determining the maximum serving grant value according to a current maximum serving grant value, the non-serving relative grant message, and a reference value during duration of a non-serving relative grant timer.

8. The method of claim 7, **characterized in that** determining the maximum serving grant value according to the current maximum serving grant value, the non-serving relative grant message, and the reference value comprises:
determining an adjustment result of the serving grant value according to the non-serving relative grant message and the reference value; and
determining the maximum serving grant value according to a minimum value of the adjustment result of the serving grant value and the current maximum serving grant value.

9. The method of claim 8, **characterized in that** determining the adjustment result of the serving grant value according to the non-serving relative grant message and the reference value is setting the adjustment result of the serving grant value as a value gained by subtracting a preset value from the reference value when the non-serving relative grant message indicates to reduce the serving grant value of the user end.

10. A communications device (100) of a wireless communications system according to the Medium Access Control protocol specification of the 3^{rd} Generation Partnership Project utilized for accurately setting a serving grant value for avoiding radio resource waste and system overload, the communications device comprising:
a control circuit (106) for realizing functions of the communications device (100);
a central processing unit (108) installed in the control circuit (106) for executing a program code (112) to operate the control circuit (106); and
a memory (110) coupled to the central processing unit (108) for storing the program code (112);
wherein the program code (112) comprises:
receiving a non-serving relative grant message
**characterized in that** the program code (112) further comprises determining a maximum serving grant value when the non-serving relative grant message is received (302); and
updating the serving grant value according to the maximum serving grant value (304).

11. The communications device of claim 10, **characterized in that** in the program code (112), the step of updating the serving grant according to the maximum serving grant value comprises:
updating the serving grant value as a minimum value of the maximum serving grant value and a current serving grant value.

12. The communications device of claim 10, **characterized in that** in the program code (112), the step of determining the maximum serving grant value when the non-serving relative grant message is received comprises:
determining the maximum serving grant value according to the non-serving relative grant message and a reference value.

13. The communications device of claim 12, **characterized in that** the reference value is corresponding to a serving grant value of a previous transmission time interval.

14. The communications device of claim 12, **characterized in that** in the program code (112), determining the maximum serving grant value according to the non-serving relative grant message and the reference value comprises:
determining an adjustment result of the serving grant value according to the non-serving relative grant message and the reference value; and
determining the maximum serving grant value according to the adjustment result of the serving grant value.

15. The communications device of claim 14, **characterized in that** in the program code (112), determining the adjustment result of the serving grant value according to the non-serving relative grant message and the reference value is setting the adjustment result of the serving grant value as a value gained by subtracting a preset value from the reference value when the non-serving relative grant message indicates to reduce the serving grant value of the user end.

16. The communications device of claim 10, **characterized in that** in the program code (112), the step of determining the maximum serving grant value when the non-serving relative grant message is received comprises:
determining the maximum serving grant value according to a current maximum serving grant value, the non-serving relative grant message, and a reference value during duration of a non-serving relative grant timer.

17. The communications device of claim 16, **characterized in that** in the program code (112), determining the maximum serving grant value according to the current maximum serving grant value, the non-serving relative grant message, and the reference value comprises:
determining an adjustment result of the serving grant value according to the non-serving relative grant message and the reference value; and
determining the maximum serving grant value according to a minimum value of the adjustment result of the serving grant value and the current maximum serving grant value.

18. The communications device of claim 17, **characterized in that** in the program code (112), determining the adjustment result of the serving grant value according to the non-serving relative grant message and the reference value is setting the adjustment result of the serving grant value as a value gained by subtracting a preset value from the reference value when the non-serving relative grant message indicates to reduce the serving grant value of the user end.
